# EUROPÄISCHE PATENTSCHRIFT

(11) **EP 0 970 395 B1**
(45) Veröffentlichungstag und Bekanntmachung des Hinweises auf die Patenterteilung: **24.10.2001**
(21) Anmeldenummer: 98928090.4
(22) Anmeldetag: 26.03.1998
(51) Int. Cl.: G02B 6/10, G02B 6/16, G02B 6/293, G02B 6/32, G02B 6/34

(54) **FASER-INTEGRIERTE MIKROLINSEN UND OPTISCHE FASER-BRAGG-GITTER-KOPPLER UND DAMIT AUFGEBAUTE SPEKTROMETER UND MULTIPLEXER**
FIBER-INTEGRATED MICROLENSES AND OPTICAL FIBER BRAGG GRATING COUPLER, AND SPECTROMETER AND MULTIPLEXER ASSEMBLED WITH THE SAME
MICROLENTILLES INTEGREES A DES FIBRES ET COUPLEURS OPTIQUES A RESEAU DE BRAGG SITUE DANS LA FIBRE; SPECTROMETRES ET MULTIPLEXEURS AINSI CONSTITUES

(30) Priorität: 29.03.1997 DE 19713374
(43) Veröffentlichungstag der Anmeldung: 12.01.2000
(73) Patentinhaber: Deutsche Telekom AG, 53113 Bonn (DE); OFT Associates, Avon, CT 06001 (US)
(72) Erfinder: KOOPS, Hans, W., P., D-64372 Ober-Ramstadt (DE); MELTZ, Gerald, Avon, CT 06001 (US)
(74) Vertreter: Gornott, Dietmar, Dipl.-Ing.
(86) Internationale Anmeldenummer: DE9800904
(87) Internationale Veröffentlichungsnummer: WO9844366

(56) Entgegenhaltungen:
- EP-A- 0 435 194
- US-A- 5 101 458
- US-A- 5 132 843
- US-A- 5 307 437
- US-A- 5 412 746
- US-A- 5 442 439
- PATENT ABSTRACTS OF JAPAN vol. 006, no. 145 (P-132), 4. August 1982 & JP 57 066403 A (NIPPON TELEGR & TELEPH CORP), 22. April 1982

## Beschreibung

### Technisches Gebiet

Die vorliegende Erfindung betrifft Linsen, die direkt auf der zylindrischen Oberfläche des Mantels (Cladding) einer optischen Faser aufgebracht werden, um die fokussierte Übertragung von Licht in ein und aus einem eingeschriebenen Faser-Bragg-Gitter (FBG) zu gestatten, das im Kern der optischen Faser gebildet wird, sowie Koppler, Spektrometer und Multiplexer, bei denen solche Mikrolinsen und Faser-Bragg-Gitter zur Anwendung kommen.

### Technischer Hintergrund

Es ist relativ leicht, Licht zwischen aufeinander ausgerichteten optischen Fasern und zwischen einer punktförmigen Lichtquelle und einer optischen Faser zu koppeln, indem man eine an der Pupille (dem Ende) der Faser angebrachte Linse verwendet, die das Licht auf die oder aus der Faseröffnung so fokussiert, wie es von Babin, Weber und Koops in "Fabrication of a Refractive Microlens Integrated Onto the Monomode Fiber" in Proc. EIPBN 1996, J. Vac. Sci. Technol. B14(6) Nov./Dec. 1996, p. 4076 (Ref. 1) und von Koops und Babin in "Verfahren zur Herstellung und Justierung von Mikrolinsen auf Faser- und Laserenden" (1996) P 19 54 5721.8 (Ref. 2) beschrieben wurde.

Es gibt jedoch viele Fälle, in denen gewünscht wird, Licht zwischen einer Faser und mehreren Fasern oder zwischen Multiplets zu koppeln, z.B. in einer komplexen Laserlichtquelle oder in anderen Fällen, bei denen sich fächer- oder kegelförmige Lichtmuster ergeben. Diese lassen sich nur äußerst schwer auf und von einer punktförmigen Fasereintrittspupille fokussieren. Spektrometer, die im Zusammenhang mit optischen Fasern eingesetzt werden, sind komplex, teuer und schwer zu benutzen. Wellenlängenmultiplex, bei dem Licht verschiedener Wellenlängen aus verschiedenen Fasern in eine Faser hinein zusammengeführt oder aus einer Faser in verschiedene Fasern getrennt herausgeführt werden muß, ist aus einer Vielzahl von Gründen, einschließlich der obengenannten, äußerst schwierig.

### Darstellung der Erfindung

Die Gegenstände der Erfindung umfassen eine verbesserte Kopplung zwischen optischen Fasern und zugehörigen optischen Elementen, einschließlich anderer optischer Fasern; die Verfügbarmachung eines vereinfachten Spektrometers unter Verwendung von optischen Fasern sowie eines verbesserten Wellenlängenmultiplexverfahrens und einer verbesserten Signalaufspaltung.

Nach der vorliegenden Erfindung wird eine Mikrolinse direkt auf die Oberfläche des Mantels einer optischen Faser aufgebracht. Nach der Erfindung kann die Mikrolinse asphärisch, z.B. zylindrisch, sein und das Licht in verschieden breite Streifen fokussieren, je nachdem ob es sich um eine Sammel-, Zerstreuungs- oder Kollimationslinse handelt, was beim Einkoppeln des Lichts direkt in eine mit einer ähnlichen Mikrolinse ausgestattete optische Faser nützlich ist; oder die Linse kann sphärisch (einschließlich hyperbolischer Sphäroide) sein, wodurch das Licht durch die Mikrolinse zu parallelem Licht oder in leicht divergierende oder konvergierende Strahlen oder in einem Punkt gebündelt wird; die Linse kann amorphisch (gleiche Brennweiten in verschiedenen Ebenen) oder anamorphotisch (verschiedene Brennweiten in senkrecht zueinander liegenden Ebenen) sein.

Nach der Erfindung können Linsen in den Mantel von M-Profil-Fasern eingeschrieben werden, in denen Faser-Bragg-Gitter längs im Mantel oder im äußeren Kern einer Faser gebildet werden. Nach der Erfindung können Linsen gebildet werden, die optische Achsen haben, die quer zur Achse der unterlegten Faser verlaufen, und zwar entweder senkrecht oder in einem Winkel zur Achse der unterlegten Faser, indem man unterlegte Prismen verwendet, um die Ausrichtung der optischen Achse der Linse zu ändern. Aufgrund der Erfindung kann man Linsen und Strukturen jeder beliebigen Form, einschließlich Fresnel-Linsen, vorsehen.

Die Erfindung beinhaltet eine Anzahl von Faser-Bragg-Gitter/Mikrolinsen- Sätzen in einer Faser, die zur Kopplung zwischen Fasern einzelne FBG/Mikrolinsensätze in umliegenden Fasern speist, wobei eine relativ große Anzahl von Faserausgängen angepaßt werden kann.

Die Erfindung gestattet auf einfache Weise die Trennung von Wellenlängenkomponenten eines Strahlungsmusters in einer Fokalebene, die der Achse der Faser benachbart und parallel ist: Ein FBG/Mikrolinsen-Satz, der mit einer beweglichen Anordnung von optischen Detektoren verwendet wird, bildet nach der Erfindung ein einfaches Spektrometer. Anhand der Erfindung lassen sich mit Anzapfungen versehene Verzögerungsleitungen herstellen.

Nach der Erfindung lassen sich auf einfache Weise Wellenlängenmultiplexer- (WDM) und -demultiplexer-Eigenschaften (Signalaufspaltung) erzielen, indem man Linsen gemäß der Erfindung benutzt, um Licht verschiedener Wellenlängen zu trennen oder dadurch zusammenzufassen, daß man eine Periodizität des Bragg-Gitters wählt, die innerhalb des Abstands liegt, der zur Querbeugung aller beteiligten Wellenlängen geeignet ist, wobei man in manchen Fällen Linsen mit erweiterter Fokussierfähigkeit (z.B. Fresnel-Linsen) verwendet.

Durch diese Erfindung werden außerdem Verzögerungsleitungen mit Anzapfungen, Zirkulationsspeicher und Phasenanpassungen durch Zeitverzögerung verbessert. Weitere Gegenstände, besondere Kennzeichen und Vorteile der Erfindung werden anhand der nachfolgenden ausführlichen Beschreibung von exemplarischen Realisierungen der Erfindung und anhand der beigefügten Figuren ersichtlich.

Kurze Beschreibung der Zeichnungen
- Figur 1 :: Schematischer Aufbau eines eingeschriebenen Faser-Bragg-Gitters innerhalb des Kerns einer optischen Faser nach dem früheren technischen Stand, wiedergegeben von der Seite, Schnittlinien zur besseren Übersichtlichkeit weggelassen.
- Figur 2:: Aufsicht vom Faserende auf das eingeschriebene Faser-Bragg-Gitter von Figur 1.
- Figur 3:: Stilisierte perspektivische Ansicht des eingeschriebenen Faser-Bragg-Gitters von Figur 1 und 2.
- Figur 4:: Schnittdarstellung eines eingeschriebenen Faser-Bragg-Gitters mit einer integrierten, auf der zylindrischen Oberfläche des Fasermantels gebildeten Zylinder-Mikrolinse nach der vorliegenden Erfindung, wiedergegeben von der Seite, Schnittlinien zur besseren Übersichtlichkeit weggelassen.
- Figur 5:: Aufsicht vom Faserende auf das eingeschriebene Faser-Bragg-Gitter und die Minilinse von Figur 4.
- Figur 6:: Schematischer Aufbau eines eingeschriebenen Faser-Bragg-Gitters mit einer asphärischen Mikrolinse nach der vorliegenden Erfindung zum Fokussieren in zwei Dimensionen, wiedergegeben von der Seite, Schnittlinien zur besseren Übersichtlichkeit weggelassen.
- Figur 7:: Teil eines unter Anwendung der Erfindung realisierten 1:4-Kopplers wiedergegeben von der Seite.
- Figur 8:: Teilweise stilisierte, perspektivische Ansicht eines unter Anwendung der Erfindung realisierten 1:16-Kopplers.
- Figur 9A:: Diagramm des Dotierprofils einer aus der früheren Technik bekannten M-Profil-Faser.
- Figur 9B:: Schnittdarstellung des schematischen Aufbaus eines innerhalb des Rings einer optischen M-Profil-Faser eingeschriebenen Faser-Bragg-Gitters nach der Erfindung, wiedergegeben von der Seite, Schnittlinien zur besseren Übersichtlichkeit weggelassen.
- Figur 10:: Seitenansicht einer Faser, zeigt die Prinzipien der Brechung und der Reflexion.
- Figur 11:: Seitenansicht einer Faser, zeigt die Verwendung von Prismen und Linsen der Erfindung, deren optische Achsen einen Winkel mit der Achse der darunterliegenden Faser bilden.
- Figur 12:: Seitenansicht und Blockdiagramm eines Spektrometers, das unter Beteiligung eines Faser-Bragg-Gitters und einer Mikrolinse nach der vorliegenden Erfindung aufgebaut ist.
- Figur 13:: Seitenansicht eines Faserpaars, bei dem Faser-Bragg-Gitter und die Mikrolinsen der Erfindung verwendet werden, um verschiedene Wellenlängen in räumlich unterschiedliche Punkte zu trennen, wodurch von der Wellenlänge abhängige Zeitverzögerungen in der Erregerstrahlung eingeführt werden.
- Figur 14:: Im Schnitt dargestellte Seitenansicht längs der Linie 14-14 in Figur 13, Schnittlinien zur besseren Übersichtlichkeit weggelassen.
- Figur 15:: Seitenansicht einer Wellenlängenmultiplex-Vorrichtung, bei der zwei Vergrößerungslinsen verwendet werden, um die Wellenlängenkomponenten zu trennen und sie in die Lichteintrittsfenster entsprechender Fasern zu lenken.
- Figur 16:: Ansicht eines Endes der Vorrichtung von Figur 15.
- Figur 17:: Seitenansicht einer Wellenlängenmultiplex-Vorrichtung, bei der eine einzelne Vergrößerungslinse verwendet wird und in der einige Empfängerfasern in einem Winkel zur Bildebene angeordnet sind.
- Figur 18:: Teilschnittansicht längs der Linie 18-18 von Figur 17, Schnittlinien zur besseren Übersichtlichkeit weggelassen.
- Figur 19:: Auszugsweise Seitenansicht einer alternativen Form eines Wellenlängenmultiplexers mit Einzellinse.
- Figur 20:: Seitenansicht eines Wellenlängenmultiplexers, bei dem eine Fresnel-Linse verwendet wird.
- Figur 21:: Teilschnittansicht des Endes längs der Linie 21-21 in Figur 20, Schnittlinien zur besseren Übersichtlichkeit weggelassen.

### Wege zur Ausführung der Erfindung

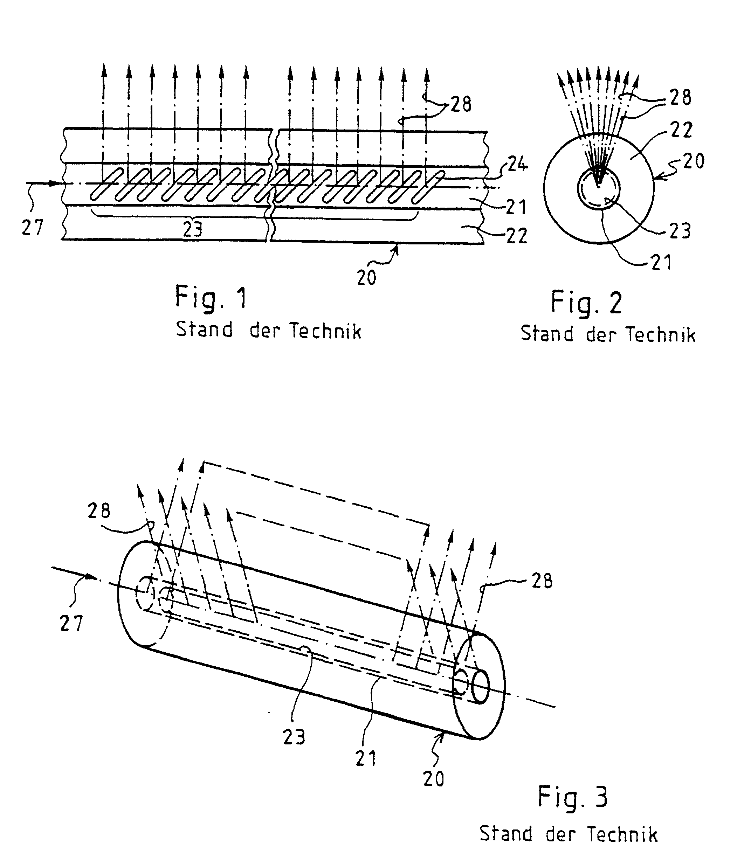

Die in Figur 1 dargestellte optische Faser 20 enthält einen Kern 21 und einen Mantel 22. Innerhalb des Kerns 21 wird mittels bekannter Einschreibetechnik ein eingeschriebenes Faser-Bragg-Gitter (FBG) 23 gebildet, bei dem die Brechzahlabweichungen (Gitter) in einem Winkel angeordnet sind, der hier als "blazed" bezeichnet wird. Die optischen Fasern werden vorzugsweise aus Quarz (Siliziumdioxid) hergestellt, und die Maxima 24 der Abweichungen (im folgenden als "Blazes" bezeichnet) werden in dem Kern 21 auf bekannte Weise durch Belichten des Faserkerns mit einem Interferenzmuster zweier sich überlappender UV-Strahlen gebildet.

Der Blaze (Bereich maximaler Intensität) wird auf bekannte Weise durch Kippen der Faser im Interferenzmuster erzielt. Es werden keine Einzel-Blazes 24 gebildet, vielmehr ändert sich das Brechzahlmuster periodisch in Abhängigkeit von der Intensitätsänderung des UV-Lichts und der Bewegung der Faser durch das UV-Licht bei der Fertigung. Wegen der additiven Effekte können jedoch die optischen Resultate als durch Einzel-Blazes 24 verursacht betrachtet werden. Der Entwurf und die Herstellung von Faser- Bragg-Gittern wird u.a. in folgenden US-Patenten beschrieben: 5,546,481 (Ref. 3), 5,511,083 (Ref. 4), 5,061,032 (Ref. 5), 5,042,897 (Ref. 6) sowie von Metz et al. in "In-Fiber Bragg Grating Taps", Optical Society of America, Optical Fiber Communications Conference, 1990, Technical Digest Series, Vol. 1, January 22, 1990 (Ref. 7) und von Meltz und Morey in "Design and Performance of Bi-Directional Fiber Bragg Grating Taps", Optical Society of America, Optical Fiber Communications Conference, 1991, Technical Digest Paper TuM2, p. 44, February 19, 1991 (Ref. 8).

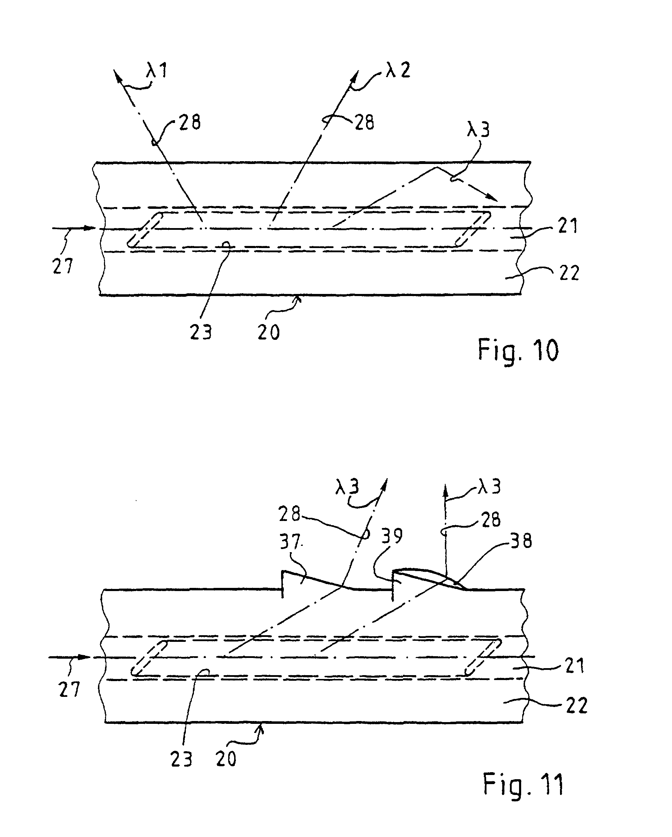

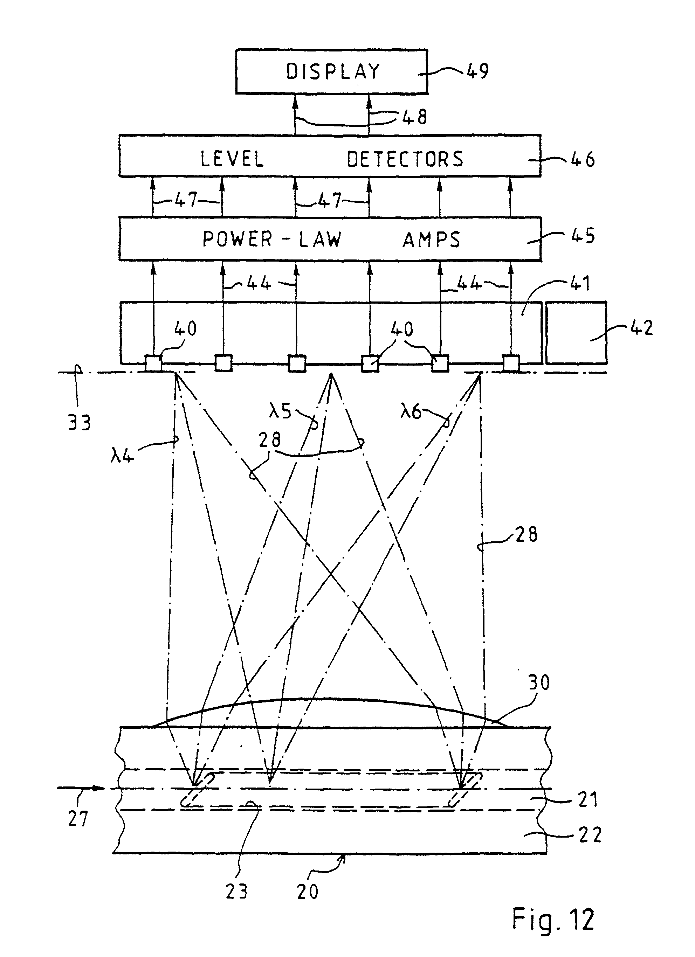

In Figur 2 wird angenommen, daß der Eintrittsstrahl 27 eine einzige Wellenlänge aufweist und daß das Bragg-Gitter 23 Licht dieser Wellenlänge veranlaßt, in eine Richtung auszutreten, die generell quer zur Achse der Faser 20 verläuft. In den hier gezeigten Abbildungen tritt das Licht von links kommend ein und wird nach oben gebeugt. Von rechts eintretendes Licht würde natürlich nach unten gebeugt werden. In Figur 1 scheint die Austrittsstrahlung 28 normal zur Faserachse zu verlaufen, dies ist jedoch nicht generell der Fall. Der exakte Winkel der Strahlung, die das Bragg-Gitter anregt, ist abhängig vom Verhältnis zwischen der Periodizität des Bragg-Gitters und der Wellenlänge der Strahlung 27. Dies wird anschließend im Zusammenhang mit den Figuren 10 und 12 ausführlicher beschrieben.

In Figur 1 scheint die Strahlung mehr oder weniger parallel in der Ebene auszutreten, die die Achse der Faser 20 enthält, was für die Blazes 24 normal ist. Die Figuren 2 und 3 zeigen jedoch, daß die austretende Strahlung 28 in jeder Ebene, die quer zur Achse der Faser 20 verläuft, stark divergent ist (ca. 10°). Deshalb wurde beim Einsatz eines wie in den Figuren 1 - 3 gezeigten Faser-Bragg-Gitters bisher eine externe Linse benötigt, die wiederum auf einem externen Träger gefertigt werden mußte und eine separate Linsenfassung erforderte, die zusammen für eine extrem hochgenaue Plazierung der Linse in Bezug auf die Lage des Faser-Bragg- Gitters 23 längs der Faser 20 und in Bezug auf eine für die Blazes normale Ebene (gerade aufwärts in Figur 2), die hierin als die Hauptbeugungsebene des Faser-Bragg-Gitters bezeichnet wird, sorgen mußten. Derartige Anordnungen machen das Faser-Bragg-Gitter für viele, wenn nicht für die meisten Anwendungen alles andere als brauchbar und bieten keine einfache Lösung für die Zielsetzungen einer verbesserten Ein- und Auskopplung bei optischen Fasern.

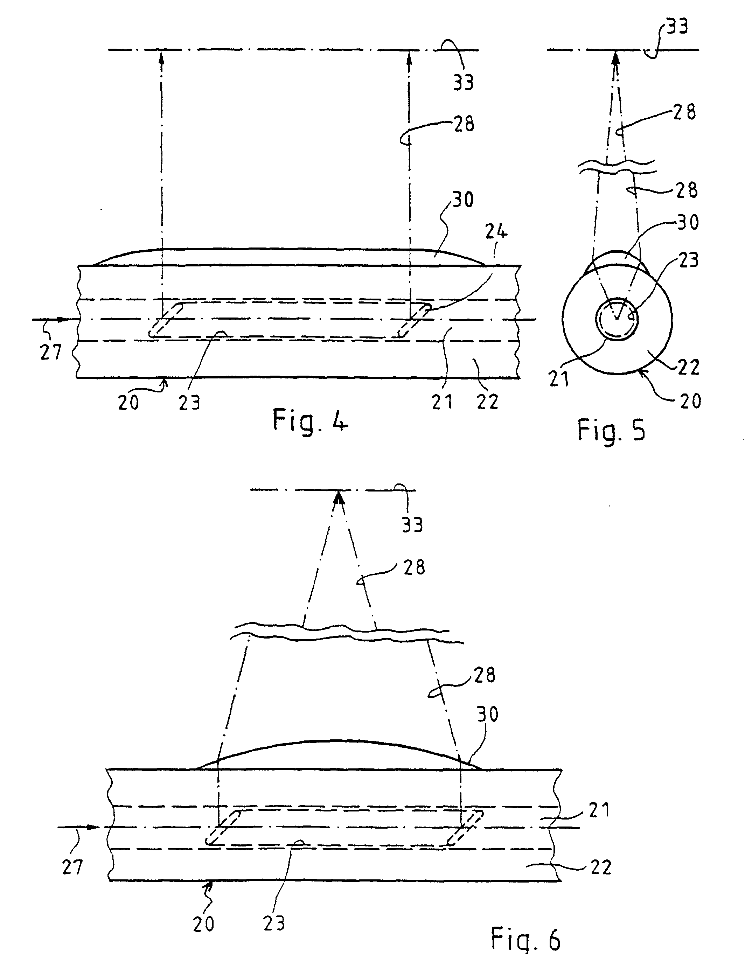

Wie in den Figuren 4 und 5 gezeigt, sammelt nun nach der vorliegenden Erfindung eine Zylinder-Linse 30 die austretende Strahlung 28 in einem streifenförmigen Brennpunkt, der im Fernfeld dieselbe Breite wie das Beugungsscheibchen der Linse hat, und fokussiert in eine Linie in einer Fokalebene 33 im Fernfeld. Wie aus Figur 5 ersichtlich ist, hat die Linse eine gekrümmte Oberfläche, die vorzugsweise eher eine hyperbolische als eine kreisförmige Form hat, so wie es von Edwards, Presby und Dragone beschrieben wurde in "Ideal Microlenses for Laser to Fiber Coupling", J. Lightwave Techn. Vol. 11, No. 2, February 1993, pp. 252-257 (Ref. 9). Die darin beschriebene hyperbolische Linse wird computergesteuert mittels Laser-Mikrobearbeitung, durch die die Quarzglasfaser abgetragen wird, auf dem optischen Eintrittsfenster (dem Ende) einer Faser gebildet.

Eine ähnliche, am Faserende angeordnete Linse kann durch Lithographie in Trockenlack-Vakuumbedampfungstechnik hergestellt werden, indem man entweder einen Korpuskularstrahl (z.B. Ionen oder Elektronen) mit hoher Tiefenschärfe oder Röntgenstrahlen mit Schablonen, die die Belichtungsstärke modulieren, verwendet, wie es von Babin und Koops beschrieben wurde in "Three- dimensional Electron Beam Lithography Using an All-Dry Resist Process", Proc. EIPBN, 1996, J. Vac. Sci. Technol. B14(6) 3800, Nov./Dec. 1996 (Ref. 10).

Unter Anwendung dieses Verfahrens auf die Erfindung wird durch Aufdampfen auf den Fasermantel eine Ausgangslackschicht definierter Dicke aufgebracht. Durch Belichtung wird die Trocken-Lack-Substanz polymerisiert und entsprechend einer Dosisverteilung so vernetzt, daß eine entsprechend geformte Linse (in diesem Fall ein Segment einer hyperbolischen Linse) mit einer geeigneten Brennweite in Querrichtung zur Faserachse 20 und einer unendlichen Brennweite in einer die Achse enthaltenden Ebene erzeugt wird.

Die Herstellung einer Mikrolinse auf der Endfläche einer Faser wird weiterhin beschrieben durch Babin, Weber und Koops in "Dry Resist Technology to Fabricate Optimized Microlens Centered to the End of a Monomode Fiber with Electron Beam Lithography", SPIE 1996 Int. Conf. on Microlithography, San Jose 1996, SPIE Vol. 2724, 578 (Ref. 11), und durch Koops et al, in "Evaluation of Dry Resistant Vinyl-T8 and its Application to Optical Microlenses", Microelectronic Engineering 30, 1996, 539 (Ref. 12).

Mit der Trockenlacktechnik und der Helligkeit der Korpuskularstrahl- und Röntgenstrahl-Lithographie gelingt es nun, durch Dosisverteilung bei der Korpuskularbelichtung bzw. bei der Röntgenbelichtung durch entsprechend abgestufte Schablonen, die mit ihrer Transparenz die Beleuchtungsstärke abschwächen und örtlich modulieren, das Linsenprofil auf dem Fasermantel zu erzeugen. Korpuskularstrahlen und auch Röntgenstrahlen weisen eine Tiefe der Schärfe auf, die weit über die geforderte Tiefenschärfe hinausgeht. Die Zentrierung der Linse zum Fasermantel (z.B. mittels belichtendem Rasterelektronenmikroskop) erfolgt entlang von Radien, die einen gemeinsamen Verlauf mit der Austrittsrichtung aus dem Faser-Bragg-Gitter (normal für die Blazes) aufweisen, an vorher aufgebrachten, zum Orientieren der Faser-Bragg-Gitter verwendeten Markierungen.

Nach der Belichtung wird durch thermische, nasse oder trockenchemische Entwicklung das nichtpolimerisierte Lackmaterial entfernt und das Linsenprofil auf diese Weise herausgearbeitet. Ebenso kann die Linse durch Strahlpolimerisation von auf der Oberfläche adsorbierten oder kondensierten monomeren Materialien aufgebaut werden, dabei wird zur Profilbestimmung der Linse die Materialzufuhr über eine Schlitzmaske gesteuert und das Material mit Hilfe des Lichts polimerisiert, das aus der Faser geliefert und durch das Faser-Bragg-Gitter, mit dem die Linse zusammenarbeiten soll, gebeugt wird.

Der erreichbare Grad der Fokussierung wird durch die bei der Linsenherstellung in Bezug auf die Wellenlänge der benutzten Strahlung verarbeitbare numerische Apertur begrenzt. Diese Beziehungen sind bekannt und werden u.a. beschrieben in Hect, Optics, 2nd Ed., Addeson-Wesley Pub. Co., 1990, Chapter 10 (Ref. 14).

Falls die Länge des Faser-Bragg-Gitters und damit die zugeordnete Mikrolinse lang genug ist, um eine stückweise Herstellung zu erfordern, kann eine besondere Stitching-Technik zum hochgenauen Anschließen der Belichtungsfelder benutzt werden, wie sie von Koops, Kretz und Weber beschrieben wird in "Combined Lithographies for the Reduction of Stitching Errors in Lithography", Proc. EIPBN 1994, J. Vac. Sci. Technol. B12(6) (1994) pp. 3265-3269 (Ref. 13).

Licht, das das Faser-Bragg-Gitter verläßt und fokussiert ist, hat eine höhere Intensität als nichtfokussiertes Licht. Analog dazu kann Licht mittels der Linse 30 und des Faser-Bragg-Gitters 23 in die Faser 20 eingekoppelt werden, wobei im Faserkern eine höhere Energiedichte (ein höherer Pumpeffekt) erzeugt wird; häufig kann durch eine Kombination aus Mikrolinse und Faser-Bragg-Gitter mit einer Länge von einigen Millimetern oder mehr eine angemessene optische Einspeisung in eine Monomode-Faser erzielt werden. Dadurch wird zum Beispiel ein besonders hoher Wirkungsgrad beim Übertragen von optischer Energie in Anwendungen wie z.B. beim Pumpen eines Lasers, der die Faser 20 beinhaltet, möglich.

Figur 6: Die Linse 30 kann sphärisch sein und eine kreisförmige oder vorzugsweise eine hyperbolische Form haben und in den Dimensionen sowohl parallel als auch quer zur Achse der Faser 20 angeordnet sein. Falls die Linse anamorphotisch ist, wird die austretende Strahlung 28 wie dargestellt auf einen Fleck in der Fokalebene 33 fokussiert. Eine anamorphotische Linse hat bekanntlich verschiedene Brennweiten in verschiedenen Dimensionen.

Figur 5 trifft sowohl auf die sphärische Linse von Figur 6 als auch auf die Zylinderlinse von Figur 4 zu.

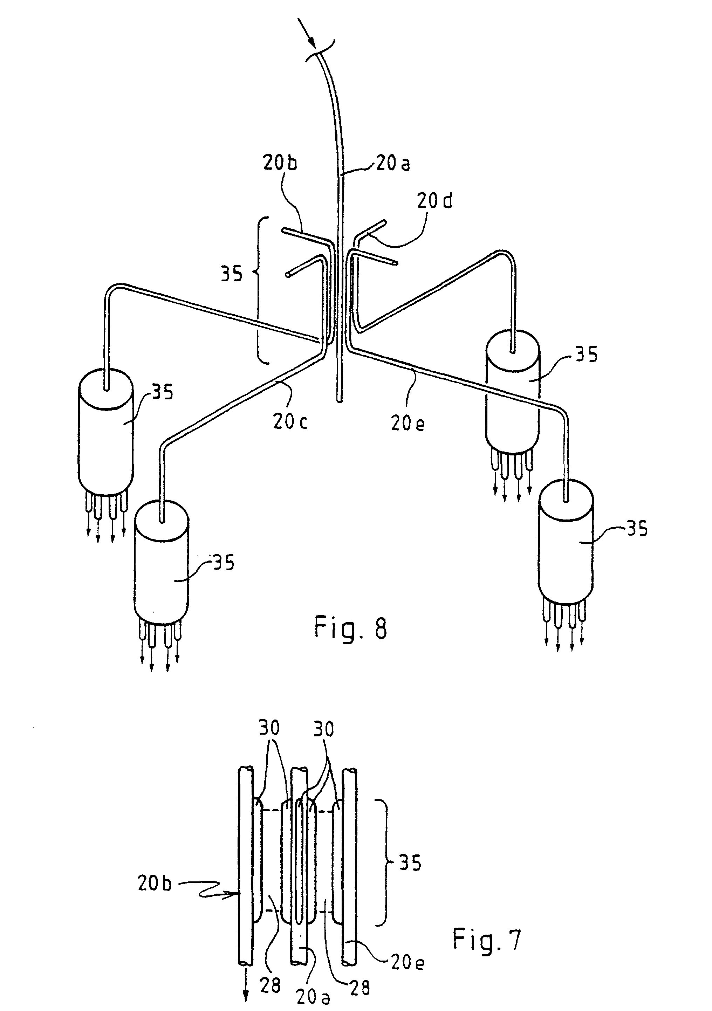

Figur 7: Die Kopplung von optischer Strahlung von einer ersten Faser 20a in eine zweite Faser 20b in einem 1:4-Koppler 35 kann auf einfache Weise mit Hilfe von Zylinderlinsen erreicht werden, die die Strahlung im wesentlichen in eine Linie fokussieren, die ausreichend nahe parallel in der Ebene der Faserachse ist, so daß fast die gesamte abgegebene Lichtmenge einer der Linsen 30 in die andere der Linsen 30 eintritt.

Der Abstand zwischen den beiden (in Figur 7 nicht echt dargestellt) kann so eingestellt werden, daß die mechanischen Montageerfordernisse erfüllt sind, damit die beiden Linsen zur substantiellen optischen Kopplung miteinander ausgerichtet bleiben. In einem solchen Fall haben die Linsen eine Brennweite, die im wesentlichen gleich dem Radius der Faser 20 ist, so daß das Licht im Faserkern 21 auf das Faser-Bragg-Gitter 23 fokussiert wird. Generell ist es zur Kopplung optischer Strahlung, z.B. die Kopplung digitaler Daten, nicht unbedingt nötig, auf einen Fleck zu fokussieren, so daß der Abstand zwischen den Linsen typischerweise nicht kritisch ist. Falls jedoch aus einem bestimmten Grund die gekoppelte Beleuchtung auf einen Fleck fokussiert werden muß, dann muß die Wahl der Linsen und der Abstand zwischen den Linsen entsprechend getroffen werden.

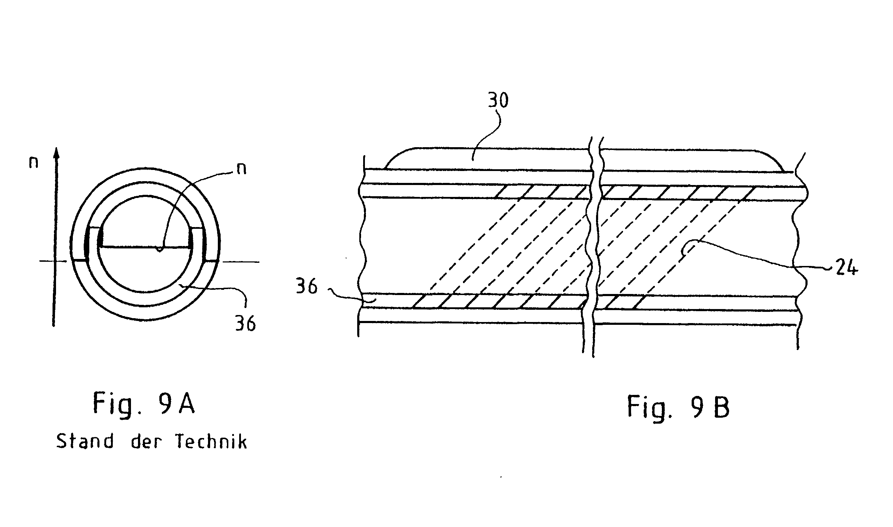

Figur 8: Dargestellt wird ein 1:16-Koppler mit fünf 1:4-Kopplern 35. Jeder der 1:4-Koppler hat eine Eintrittsfaser 20a und vier Austrittsfasern 20b- 20e. In diesem Fall hat die Eintrittsfaser 20a vier in ihrem Inneren gebildete Faser-Bragg-Gitter mit vier entsprechenden Mikrolinsen (wie in Figur 7, in Figur 8 zur besseren Übersichtlichkeit weggelassen).

Jedes Faser-Bragg-Gitter kann auf die bei den Figuren 1-3 beschriebene Weise gebildet werden, indem es über dieselbe Länge des Kerns über die anderen gelegt wird. Jede der vier Mikrolinsen wird auf die zuvor beschriebene Weise in Bezug auf ein entsprechendes FBG ausgerichtet. Aufgrund der Bragg-Beugung in jedem Faser-Bragg-Gitter treten keine gegenseitigen Störungen auf, und jedes arbeitet im wesentlichen so, als ob es das einzige in diesem Bereich des Kerns angeordnete FBG wäre.

Wie in Figur 8 gezeigt wird, können die vier Austrittsfasern 20b-20e ihrerseits Teil eines zusätzlichen 4:1- Kopplers 35 werden, um so über alles einen 1:16-Koppler zu bilden. Natürlich können auch Koppler mit ungeraden (z.B. 1:5) und anderen Zahlen verwendet werden, und die in den Figuren 7 und 8 gezeigten Koppler können auch in umgekehrter Richtung arbeiten, so daß die Fasern 20b-20e Licht von entsprechenden Kopplern 35 empfangen und es in die Faser 20a übertragen, da ja die Kombination aus Faser-Bragg-Gitter und Mikrolinse nach der vorliegenden Erfindung bidirektional ist.

Falls dies gewünscht wird, kann die Notwendigkeit, die Mikrolinsen entsprechend in Bezug auf eine Vielzahl darüberliegender Faser-Bragg-Gitter auszurichten, vermieden werden, indem man im wesentlichen omnidirektionale Faser-Bragg-Gitter verwendet. Dies erreicht man dadurch, daß man beim Belichten der Faser die Faser dreht und sie dabei gleichzeitig in Längsrichtung etwas verschiebt, so daß Einzelgitter (Blazes) in Längsrichtung leicht gegeneinander versetzt werden und der Winkel jeder einzelnen Reihe von Blazes und deshalb die Hauptbeugungsebene geringfügig anders ist als der Winkel der benachbarten Blazes.

Alternativ wird durch die Verwendung eines nichtgeblazden (senkrecht zur Faserachse angeordneten) Musters das Licht in einem konischen Muster nach Außen gebeugt. Die Intensität eines konischen Musters ist niedrig, jedoch kann mit Hilfe einer Mikrolinse in jeder beliebigen Ausrichtung zum Faser-Bragg- Gitter etwas Licht aufgefangen werden. In einem derartigen System können die Mikrolinsen irgendwo an der Peripherie der Faser plaziert werden, solange sie parallel zur Achse der Faser sind.

Eine andere Kopplerform kann für M-Profil-Faser-Laser vorgesehen werden, die Pumplicht durch Mikrolinsen auf der Oberfläche der Faser und Faser- Bragg-Gitter im äußeren (manchmal auch als "Mantel" bezeichneten) Kern 36, Figur 9A, erhalten. Siehe P. Glas et al, "Novel design for a high brightness diode pumped fiber laser source" Optics Communications, Vol. 122, pp. 163- 168, 1996. Der Begriff "M-Profil" bezieht sich auf die generell "M"-förmige Ausbildung des Brechzahlprofils über einen Querschnitt einer Faser mit nicht dotiertem Kern mit niedrigem Index, mit hoch dotiertem Innenmantel oder Ring nahe beim Kern und einem oder einer nicht dotierten Außenmantel oder -beschichtung wie in Figur 9A gezeigt.

Figur 9B zeigt die generell scheibenförmigen Blazes 24 in dem dotierten Ring und eine Mikrolinse 30 auf der Außenschicht. Bekanntlich verstärkt Pumplicht mit einer Wellenlänge (typisch 980 nm), das im äußeren Kern zugeführt wird, das Laserlicht mit einer anderen Wellenlänge (typisch 1550 nm) im zentralen Kern. Es ist eine Eigenschaft der M-Profil-Faser, daß das längerwellige Laserlicht nicht in den äußeren Kern zurückgekoppelt wird. Indem man für die Einkopplung aus einer Anzahl umgebender Fasern (z.B. 4, 16, 64 oder eine andere Anzahl) in die M-Profil-Faser sorgt, kann man eine sehr hohe Pumpleistung erzielen. In diesem Fall können die Bragg-Gitter innerhalb der M-Profil-Faser unabhängig und in Abständen um den zentralen Kern innerhalb des äußeren Kerns angeordnet sein.

Die Fasern selbst, die die M-Profil-Faser speisen, können, wie zuvor beschrieben, gewöhnliche Einzelkernfasern sein. Die Bearbeitung ist dieselbe wie zuvor für die Herstellung zusammengehöriger Sätze von Mikrolinsen und Faser-Bragg-Gittern beschrieben, wobei die Positionierung und Ausrichtung etwas unterschiedlich, aber unter Anwendung ähnlicher Techniken erfolgt. So wie der Begriff "Kern" hier in Bezug auf die Lage eines Faser-Bragg-Gitters verwendet wird, umfaßt er den äußeren Kern oder den Mantel einer M-Profil-Faser.

Figur 10: Bekanntlich beugt jedes gegebene Bragg-Gitter 23 eine Strahlung mit kürzerer Wellenlänge lambda1 in einem spitzeren Winkel als die Brechung einer Strahlung mit einer längeren Wellenlänge lambda2, und dies hat eine Bandbreite beugbarer Eintrittsstrahlung, die durch die Streuung (Periodizität) des Gitters definiert wird, und einen Winkel zur Folge, unter dem die Strahlung aus dem Mantel austritt, anstatt total zum Kern zurückreflektiert zu werden, wie es für den Fall einer noch längeren Wellenlänge lambda3 gezeigt wird (Ref. 6). Ebenfalls bekannt ist, daß, je kleiner der Winkel der gebeugten Strahlung ist (lambda3 gegen lambda2 in Figur 10), die Intensität der gebeugten Beleuchtung umso größer ist und deshalb der Wirkungsgrad der Kopplung zwischen der eintretenden und der austretenden Strahlung umso größer ist.

Figur 11: Auf dem Mantel 22 der Faser 20 ist ein Prisma 37 ausgebildet. Das Prisma erhöht den Winkel zwischen der Manteloberfläche und der Strahlung in ausreichendem Maße, so daß die lambda3-Strahlung aus der Faser austritt, anstatt wie in Figur 10 reflektiert zu werden. Durch Ausbilden einer Linse 38 auf einem Prisma 39, kann die Fokussierung und Steuerung der Austrittsstrahlung auf die zuvor beschriebene Weise erreicht werden.

Tatsächlich ist es mit Hilfe der zuvor beschriebenen Verfahren zum Bilden von Linsen direkt auf dem Mantel möglich, Strukturen in jeder gewünschten Form nacheinander zu bilden, so daß die Linsen nach der Erfindung die Form von Linsen 30 haben können, deren optische Achsen senkrecht zur Achse der darunterliegenden Faser verlaufen, wobei die optischen Achsen der Linsen 38 in einem Winkel zu den Achsen der darunterliegenden Faser verlaufen, sowie die Form von diskontinuierlichen Linsen, z.B. Fresnel-Linsen, haben können, wie im folgenden noch beschrieben wird.

Die Verwendung von Prismen und/oder Winkellinsen, wie in Figur 11 dargestellt, ermöglicht eine Beziehung zwischen Wellenlänge und Periodizität, die sehr niedrige Beugungswinkel (lambda3 in Figur 10) zur Folge hat, was den optischen Wirkungsgrad so erhöht, daß viel gröbere, wirkungsschwächere und dadurch weniger teure Faser-Bragg-Gitter verwendet werden können. Andererseits kann man so die Bandbreite der Faser-Bragg- Gitter erhöhen, falls man dies wünscht.

Figur 12: Ein Spektrometer nach der Erfindung kann aus einer optischen Faser 20 bestehen, die ein Faser-Bragg-Gitter 23 hat, das mit einer Mikrolinse 30 des zuvor in Bezug auf die Figuren 5 und 6 beschriebenen Typs zusammenarbeitet. Durch geeignete Wahl der Linse und des Abstands zwischen der Linse und ihrer Fokalebene 33 kann die mit Komponenten verschiedener Wellenlänge in das Faser-Bragg-Gitter eintretende Strahlung 27 in ihre Wellenlängenbestandteile zerlegt werden, so daß die austretende Strahlung 28 Komponenten mit unterschiedlichen Wellenlängen, z.B. lambda4, lambda5, lambda6 in Figur 6, enthält, die auf entsprechende Punkte in der Fokalebene 33 fokussiert werden.

Eine Anordnung geeigneter Photodetektoren 40, z.B. Photowiderstände, kann auf einer geeigneten Struktur 41 zur seitlichen Bewegung (nach rechts und links in Figur 12) mit Hilfe eines geeigneten elektromechanischen Mittels, z.B. mit einem piezoelektrischen Motor 42, angeordnet werden. Durch die Bewegung der Photodetektoren 40 wird sichergestellt, daß der eine oder der andere von ihnen die Maxima bei verschiedenen Wellenlängen feststellt, obwohl der Abstand der Photodetektoren 40 räumlich nicht mit derartigen Maxima übereinstimmt, wie aus Figur 12 ersichtlich ist.

Zur Verbesserung der Empfindlichkeit kann das Ausgangssignal eines jeden Photodetektors 40 über eine entsprechende Signalleitung 44 jeweils einem zugehörigen von mehreren Potenzierungsmultiplikatorstufen 45 zugeführt werden. Jeder der Verstärker 45 steuert seinerseits über zugehörige Signalleitungen 47 einen von mehreren Pegeldetektoren 46 an. Die Ergebnisse können über eine Signalsammelleitung 48 einer Anzeigevorrichtung 49 zugeführt werden. Die Verwendung der Mikrolinse in der Nachbarschaft eines Faser-Bragg-Gitters nach der vorliegenden Erfindung bietet eine äußerst komfortable Möglichkeit, das Licht räumlich in seine Komponenten-Wellenlängen zu zerlegen.

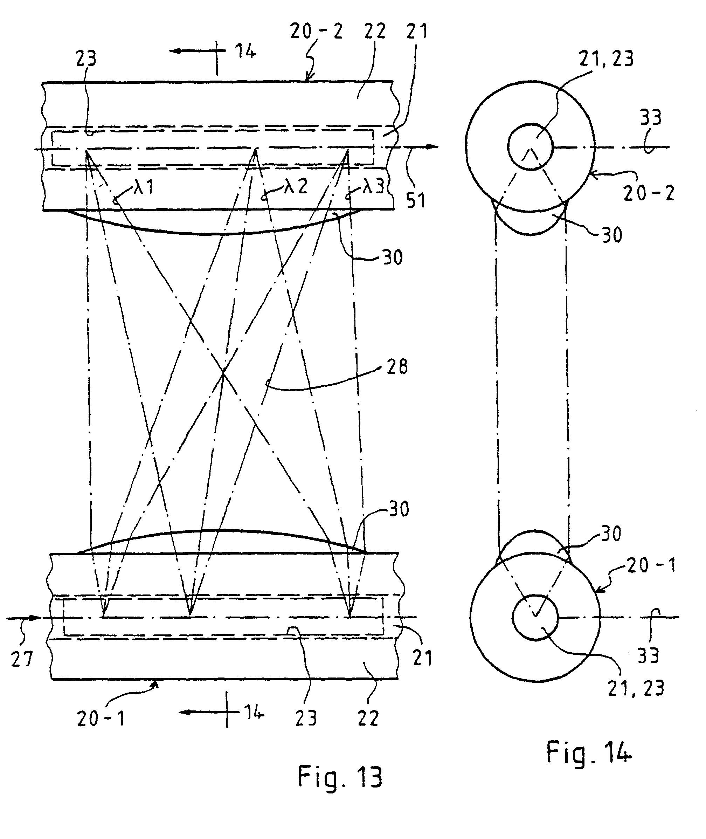

Figuren 13 und 14: Eine erste Form eines Wellenlängenmultiplexers trennt eine mehrere Wellenlängen umfassende Strahlung 27, die in eine optische Faser 20-1 mittels eines Faser-Bragg-Gitters 23 und einer Mikrolinse 30 des zuvor bei den Figuren 5 und 6 beschriebenen Typs eintritt. Die austretende Strahlung 28 wird in Komponentenwellenlängen getrennt, z.B. lambda1, lambda2, lambda3. Eine zweite Faser 20-2 hat eine ähnliche Linse 30 und ein ähnliches Faser-Bragg-Gitter, so daß die Beleuchtung verschiedener Wellenlängen in dem Faser-Bragg-Gitter der Faser 20-2 an jeweils voneinander getrennten Stellen im Faser-Bragg-Gitter 23 fokussiert wird.

Somit hat die anregende Strahlung 51 Impulse verschiedener Wellenlänge, die zeitlich getrennt sind, wobei an erster Stelle lambda3, an zweiter Stelle lambda2 und an letzter Stelle lambda1 liegt. Diese Funktion kann in einer Verzögerungsleitung mit Anzapfung genutzt werden.

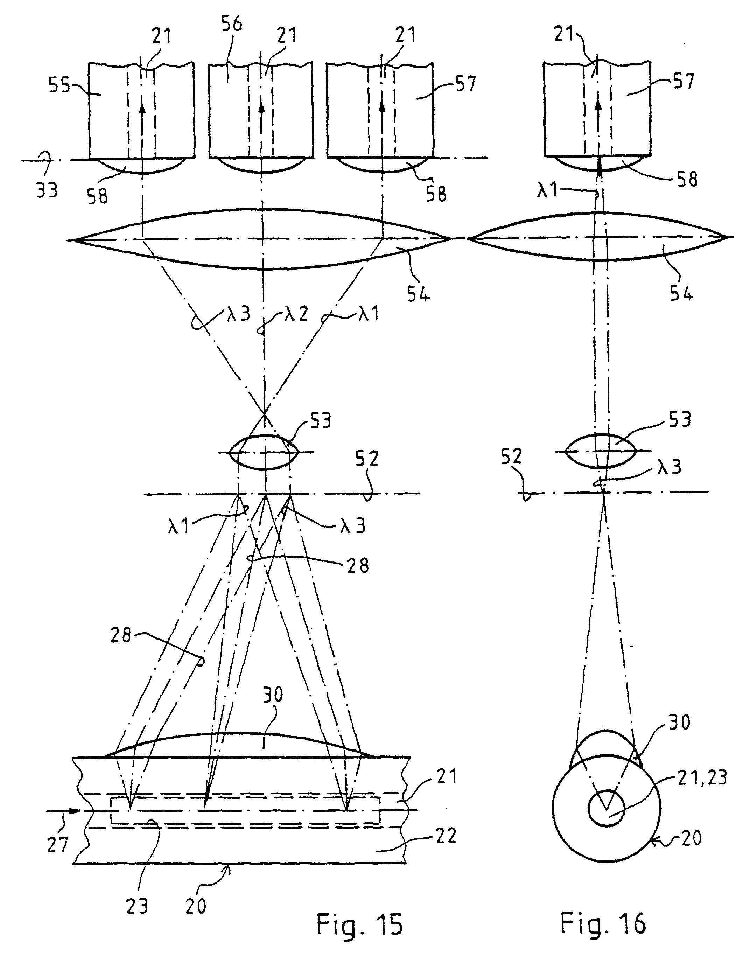

Figuren 15 und 16: Eine Linse nach der Erfindung, die in die Faser 20 mit einem darin enthaltenen Faser-Bragg-Gitter 23 eingeschrieben ist, trennt die eintreffende, mehrere Wellenlängen enthaltende Strahlung lambda1 - lambda3 27 in drei räumlich getrennte Zwischenbilder in einer Ebene 52. Eine Objektivlinse 53, die mit einer Feldlinse 54 zusammenarbeitet, fokussiert die separaten Bilder auf eine Fokalebene 33 am Eintritt zu entsprechenden Fasern 55-57. Die Fasern können darauf ausgebildete Pupillenlinsen 58 des zuvor unter Ref. 11 und Ref. 12 beschriebenen Typs haben.

Die Vorrichtungen in Figur 15 und 16 werden in der Funktion als Demultiplexer dargestellt, in dem die einzelnen, die Informationen enthaltenden Komponenten in der eintretenden Strahlung 27 getrennt in die entsprechenden Fasern 55-57 geführt werden. Natürlich könnten die Vorrichtungen auch als Multiplexer arbeiten, um die Informationen in den Fasern 55-57 zu einem mehrere Strahlungskomponenten umfassenden Strahl in die Faser 20 zusammenzuführen. So wie der Begriff "Multiplexer" hier verwendet wird, umfaßt er die Multiplex-Funktion (ADD) und die Demultiplex- Funktion (DROP).

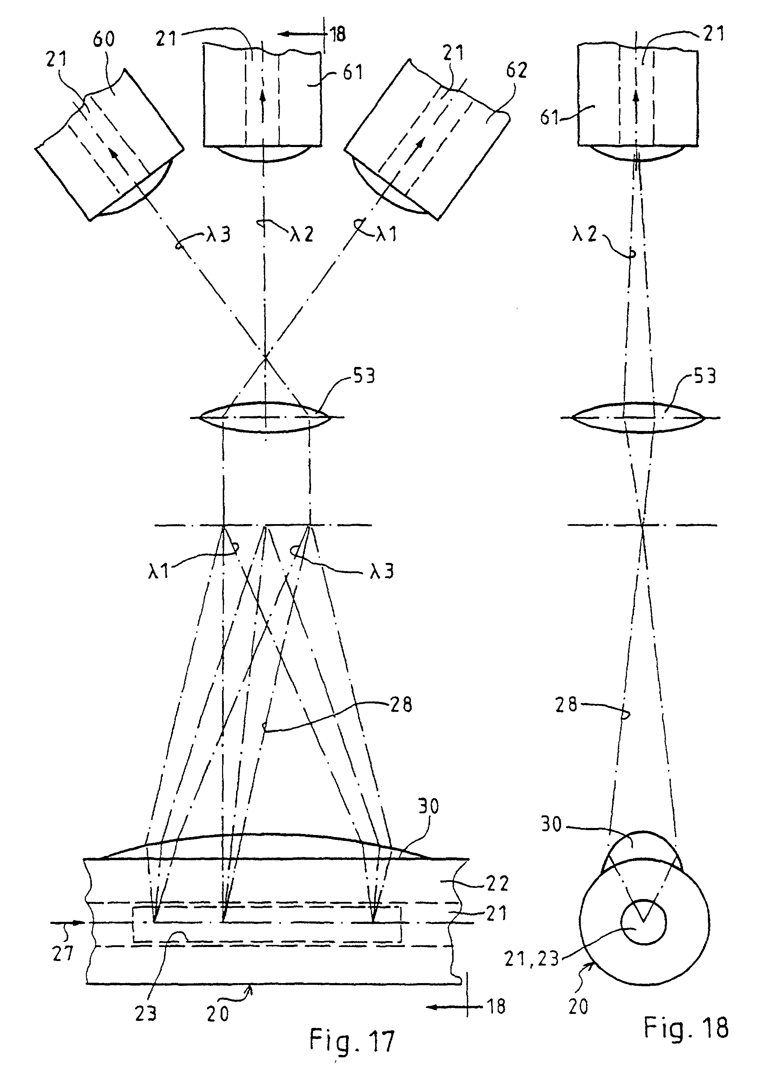

Figuren 17 und 18: Die gezeigten Vorrichtungen sind ähnlich wie die in den Figuren 15 und 16, ausgenommen daß die Feldlinse 54 nicht verwendet wird, so daß einige der aus der Fokalebene austretenden Lichtstrahlen (lambda1, lambda3), mit Ausnahme der Lichtstrahlen (lambda2) in der Bildmitte, einen Winkel zur Bildebene bilden. Obwohl die Winkelausrichtung der Fasern 60, 62 sorgfältig ausgeführt werden muß, ist ein Eintrittswinkel der Strahlung von bis zu ca. 10° generell tolerierbar, weil geeignete Aperturen (z.B. die unter Bezug auf Ref. 11 und Ref. 12 zuvor beschriebenen Pupillenlinsen) so bearbeitet werden können, daß sie geeignete Aperturen an den Faserenden zur Verfügung stellen.

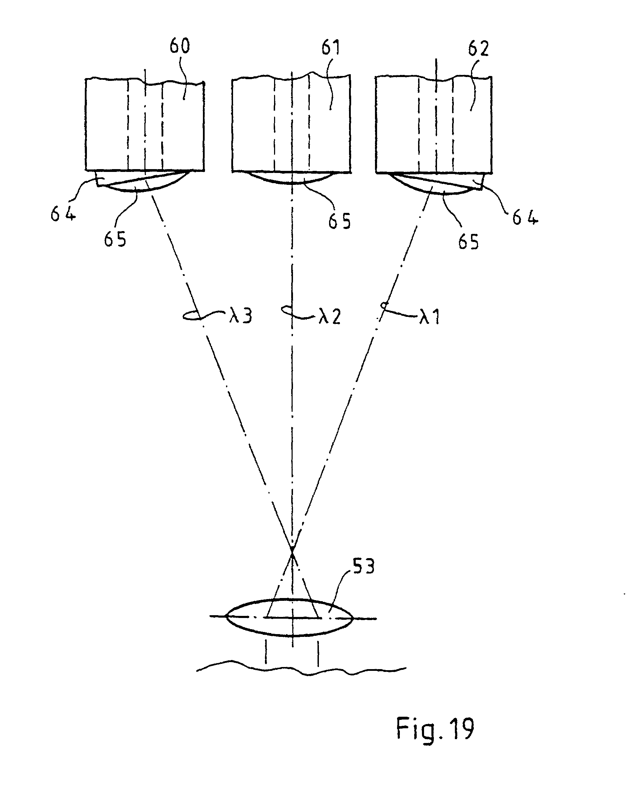

In dem Fall, in dem die Vergrößerung durch eine Einzellinse 53 bewirkt wird, können die Lichteintrittsfenster der Fasern 60-62, wie in Figur 19 gezeigt, abhängig von der Empfangsfaseranordnung in der Fokalebene mit Prismen 64 und Linsen 65 in der Vergrößerungsbildebene versehen werden, wodurch das in die Faser zu sendende Licht selbst dann direkt aufgenommen werden kann, wenn die Fasern 60-62 parallel zu einem Bündel zusammengefaßt sind.

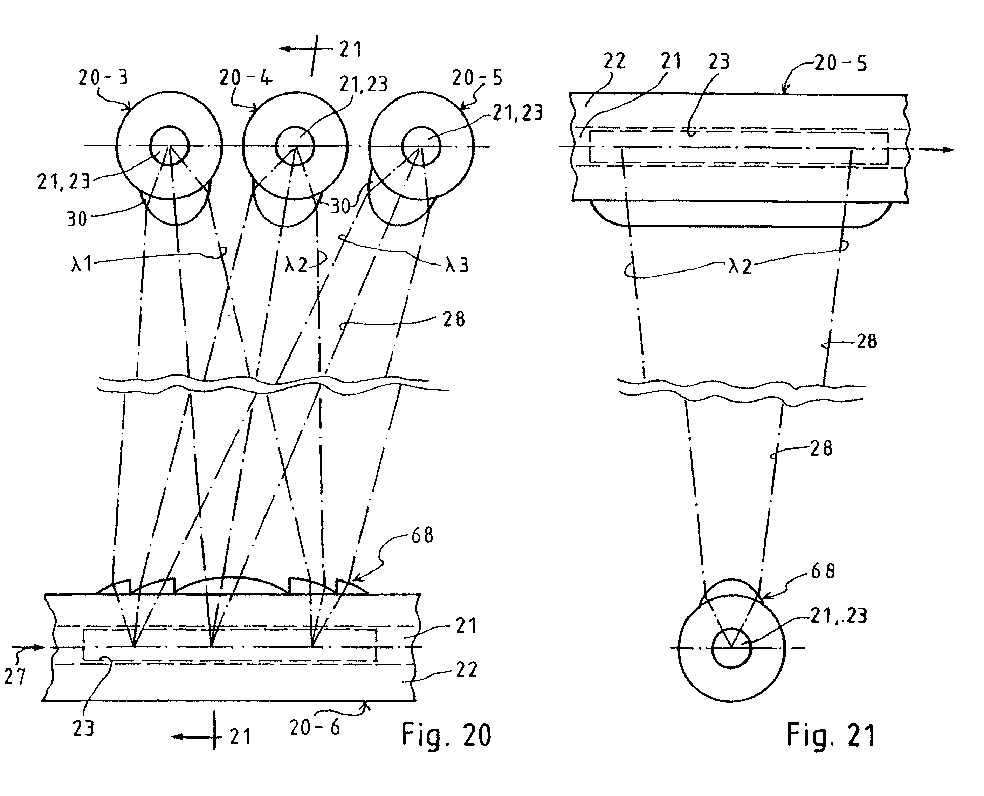

Figuren 20 und 21: In einem mit zwei verschiedenen Arten von Mikrolinsen nach der Erfindung aufgebauten Wellenlängenmultiplexer werden Fasern 20-3, 20-4 und 20-5 mit Zylinderlinsen 30 des zuvor bei den Figuren 4 und 5 beschriebenen Typs verwendet, um die einzelnen Wellenlängenkomponenten zu führen. Eine Faser 20-6 mit einem Faser- Bragg-Gitter 23 des zuvor beschriebenen Typs ist mit einer Fresnel-Linse 68 ausgestattet, die über das Spektrum der Wellenlängen lambda1 bis lambda3 eine viele längere Brennweite als eine sphärische Linse hat.

Da man mit den zuvor beschriebenen Verfahren zur Fertigung von Linsen Strukturen mit jeder beliebigen Form herstellen kann, kann das zwar komplizierte Einschreiben der Fresnel-Linse 68 doch bei einiger Sorgfalt auf einfache Weise erfolgen. So beginnt die Strahlung als komplexer Streifen auf dem Faser-Bragg-Gitter der Faser 20-6 und wird dann in den Faser-Bragg-Gittern der Fasern 20-3, 20-4 und 20-5 zu senkrecht zu dem komplexen Streifen verlaufenden Streifen von einzelnen Komponentenwellenlängen.

Der Strahl in Figur 21 ist divergierend dargestellt, um der Tatsache Rechnung zu tragen, daß die Faser-Bragg-Gitter generell länger als der Durchmesser einer Faser oder einer darauf eingeschriebenen Mikrolinse sind; andernfalls kann der Strahl mit einem Expander aufgeweitet werden. In den Figuren 20 und 21 wird die Eintrittsstrahlung 27 durch das Faser-Bragg-Gitter 23 und die Fresnel-Linse 68 in ihre einzelnen Komponentenwellenlängen lambda1 bis lambda3 in der Austrittsstrahlung 28 getrennt, womit die Funktion eines Demultiplexers erreicht wird. Natürlich könnte man Strahlung mit getrennten Wellenlängen in den Fasern 20-3, 20-4 und 20-5 in der Faser 20-6 zusammenführen und somit die Funktion eines Multiplexers erzielen. Die Fasern 20-3, 20-4 und 20-5 können als Schleifen ausgebildet sein und so die Eigenschaft von Zirkulationsspeichervorrichtungen, Verzögerungsleitungen mit Anzapfungen und Phasenanpassungsvorrichtungen mittels Zeitverzögerung bieten.

In einer Variante der Funktion in den Figuren 20 und 21 kann eine sphärische Linse auf den Fasern 20-3, 20-4 und 20-5 verwendet werden, um auf eine Stelle in dem jeweils zugehörigen Faser-Bragg-Gitter zu fokussieren; jedoch wird bekanntermaßen und bevorzugterweise mit einem Streifen eine bessere Kopplung erzielt.

Bei jeder der zuvor erwähnten sphärischen Linsen 30 kann es sich um Fresnel-Linsen handeln, wodurch eine viel längere Brennweite in Bezug auf die Linsengröße erreicht wird, indem entweder die Linse geformt wird (wie in den Figuren 11 und 20) oder das Material der Linse mit angemessen unterschiedlichen Brechzahlen versehen wird, um so die erforderlichen 2π- Phasensprünge (oder mehrfache Werte davon) zur Erzielung eines Fresnel- Effekts zur Verfügung zu stellen.

Natürlich könnte die Fresnel-Linse in Figur 20 auch dadurch erzielt werden, daß man in verschiedenen Teilen der Linse unterschiedliche Brechzahlen vorsieht, anstatt unterschiedliche Formen in den verschiedenen Teilen der Linse vorzusehen. Selbstverständlich kann die Erfindung in komplexen Kombinationen der hier dargestellten Funktionseinheiten oder Teilen davon verwendet werden.

Die Koppler und insbesondere die Multiplexer nach der Erfindung können mit geeigneten, bekannten Koppelvorrichtungen, z.B. "Circulators", verwendet werden, um Licht aus einer Sendefaser in speichernde Faserschleifen einzukoppeln und so Verzögerungen in Abhängigkeit von der Länge der Schleife einzuführen und das verzögerte Licht wieder in die Sendefaser zurückzuführen.

Obwohl die Erfindung unter Bezugnahme auf beispielhafte Realisierungen dargestellt und beschrieben wurde, sollte jedem mit entsprechenden technischen Kenntnissen klar sein, daß die o.g. und zahlreiche andere Änderungen, Weglassungen und Hinzufügungen daran vorgenommen werden können, ohne dadurch vom Geist und Geltungsbereich der Erfindung abzuweichen.

## Patentansprüche

1. Optische Vorrichtung, die folgendes umfaßt:
eine optische Faser (20) mit einer Achse, einem diese Achse koaxial umgebenden Kern (21) und einem Mantel (22), der den Kern (21) koaxial umgibt und außen eine periphere Oberfläche besitzt;
ein Faser-Bragg-Gitter (FBG) (23), das innerhalb einer festgelegten Länge des Kerns eingeschrieben ist und eine Hauptbeugungsebene hat; und
eine in die Oberfläche des Mantels eingeschriebene Linse, wobei sich diese Linse (30) ungefähr über die festgelegte Länge erstreckt und eine quer zur Faserachse und im wesentlichen in der Hauptbeugungsebene verlaufende optische Achse (Linsenachse) hat, wobei diese Linse (30) über der Oberfläche in Bezug auf die Hauptbeugungsebene so ausgerichtet ist, daß sie optisch mit dem FBG (23) gekoppelt ist.

2. Optische Vorrichtung nach Anspruch 1, bei der die optische Achse im wesentlichen senkrecht zur Faserachse ist.

3. Optische Vorrichtung nach Anspruch 1, bei der die Linse ein Prisma (37) enthält, wodurch ihre optische Achse einen spitzen Winkel mit der Faserachse bildet.

4. Optische Vorrichtung nach Anspruch 1, bei der die Linse (30) zylindrisch ist.

5. Optische Vorrichtung nach Anspruch 1, bei der die Linse 30) in einer ersten, die Faserachse enthaltenden Ebene und in einer zweiten, quer zur Faserachse angeordneten Ebene fokussiert.

6. Optische Vorrichtung nach Anspruch 5, bei der die Linse (30) amorph ist.

7. Optische Vorrichtung nach Anspruch 5, bei der die Linse (30) asphärisch ist und in der ersten Ebene eine andere Brennweite als in der zweiten Ebene hat.

8. Optische Vorrichtung nach Anspruch 1, bei der die Linse (68) eine Fresnel-Linse ist.

9. Optische Vorrichtung nach Anspruch 8, bei der die Linse (68) aus diskreten Linsenteilen mit verschiedenen, durch unterschiedliche Formen bedingte Brennweiten besteht.

10. Optische Vorrichtung nach Anspruch 8, bei der die Linse (68) aus diskreten Linsenteilen mit verschiedenen, durch Brechzahlvariationen verursachte Brennweiten besteht.

11. Optokoppler, der folgendes umfaßt:
eine erste optische Vorrichtung und mindestens eine zusätzliche optische Vorrichtung, wobei jede optische Vorrichtung folgendes beinhaltet:
eine optische Faser (20a, 20b, 20c, 20d, 20e) mit einer Achse, einem diese Achse koaxial umgebenden Kern und einem Mantel, der diesen Kern koaxial umgibt und eine äußere periphere Oberfläche besitzt;
ein Faser-Bragg-Gitter (FBG), das innerhalb einer festgelegten Länge des Kerns eingeschrieben ist und eine Hauptbeugungsebene hat;
eine in die Oberfläche des Mantels eingeschriebene Linse (30), wobei sich diese Linse ungefähr über die festgelegte Länge erstreckt und eine quer zur Faserachse und im wesentlichen in der Hauptbeugungsebene verlaufende optische Achse hat und wobei diese Linse über der Oberfläche relativ zur Hauptbeugungsebene so ausgerichtet ist, daß sie optisch mit dem FBG gekoppelt ist; wobei diese erste optische Vorrichtung zusätzlich folgendes beinhaltet:
mindestens ein zusätzliches FBG, das innerhalb der festgelegten Länge eingeschrieben ist und eine Hauptbeugungsebene hat, wobei ein zusätzliches FBG für jede dieser zusätzlichen optischen Vorrichtungen vorhanden ist und jedes FBG der ersten optischen Vorrichtung mit seiner Hauptbeugungsebene über dem Kern in einem Winkel relativ zur Hauptbeugungsebene eines benachbarten FBG ausgerichtet ist; mindestens eine zusätzliche Linse (30), die in die Oberfläche des Mantels eingeschrieben ist, jeweils eine für jedes zusätzliche FBG, wobei sich jede zusätzliche Linse (30) ungefähr längs der festgelegten Länge erstreckt und
wobei jede zusätzliche Linse (30) eine optische Achse hat, die quer zur Faserachse und im wesentlichen in der Hauptbeugungsebene eines entsprechenden zusätzlichen FBG verläuft, und wobei jede zusätzliche Linse (30) in Bezug auf Hauptbeugungsebene des entsprechenden FBG so über der Oberfläche ausgerichtet ist, daß sie mit dem entsprechenden FBG (23) optisch gekoppelt ist; und
wobei die Linse (30) der entsprechenden optischen Vorrichtung zur substantiellen optischen Kopplung mit einer entsprechenden Linse (30) auf der ersten optischen Vorrichtung ausgerichtet ist.

12. Optokoppler nach Anspruch 11, bei dem eine gerade Anzahl der zusätzlichen Vorrichtungen vorhanden ist.

13. Optokoppler nach Anspruch 12, bei dem vier der zusätzlichen Vorrichtungen vorhanden sind.

14. Spektrometer, das folgendes umfaßt:
eine optische Faser 20) mit einer Achse, einem diese Achse koaxial umgebenden Kern (21) und einem Mantel (22), der diesen Kern (21) koaxial umhüllt und eine äußere periphere Oberfläche hat;
ein Faser-Bragg-Gitter (FBG) (23), das innerhalb einer festgelegten Länge dieses Kerns (21) eingeschrieben ist und eine Hauptbeugungsebene hat;
eine in die Oberfläche des Mantels (22) eingeschriebene Linse (30), wobei sich diese Linse (30) ungefähr über die festgelegte Länge erstreckt und eine quer zur Faserachse und
im wesentlichen in einer Ebene, die die Hauptbeugungsebene enthält, verlaufende optische Achse (Linsenachse) hat und
wobei diese Linse über der Oberfläche in Bezug auf die Hauptbeugungsebene so ausgerichtet ist, daß sie optisch mit dem FBG (23) gekoppelt ist; und
eine Anordnung von Photodetektoren (40), die im wesentlichen in der Fokalebene dieser Linse angeordnet sind.

15. Spektrometer nach Anspruch 14, das außerdem folgendes umfaßt:
ein Mittel (42), um die o.g. Anordnung in einer Richtung zu bewegen, die im wesentlichen parallel zur der Hauptbeugungsebene ist.

16. Spektrometer nach Anspruch 14, das außerdem folgendes umfaßt:
einen Potenzierungsmultiplikator (45) für jeden der Photodetektoren (40), der jeweils auf das Ausgangssignal des entsprechenden Photodetektors (40) anspricht, um ein verstärktes Signal an eine entsprechende Signalleitung (47) liefern.

17. Spektrometer nach Anspruch 16, das außerdem folgendes umfaßt:
je einen entsprechenden Pegeldetektor (46) zu jeder Signalleitungen (47), der jeweils ein Signal an die zugehörige Signalausgangsleitung (48) liefert, das den Signalpegel auf der entsprechenden Signalleitung (47) angibt.

18. Spektrometer nach Anspruch 17, das außerdem folgendes umfaßt:
eine Anzeigevorrichtung (49) zum Anzeigen der Pegel der von den Photodetektoren (40) festgestellten Wellenlängen, die auf die Signale an den Signalausgangsleitungen (48) anspricht.

19. Wellenlängenmultiplexer mit einer Zwischenbildebene, der folgendes umfaßt:
eine optische Faser (20) mit einer Achse, einem diese Achse koaxial umgebenden Kern (21) und einem Mantel (22), der diesen Kern (21) koaxial umgibt und eine äußere periphere Oberfläche besitzt;
ein Faser-Bragg-Gitter (23), das innerhalb einer festgelegten Länge des Kerns (21) eingeschrieben ist und
eine Hauptbeugungsebene hat;
eine in die Oberfläche des Mantels eingeschriebene Linse (30), wobei sich diese Linse (30) ungefähr über die festgelegte Länge erstreckt und eine quer zur Faserachse und
im wesentlichen in der Hauptbeugungsebene verlaufende optische Achse hat und wobei diese Linse Strahlen verschiedener Wellenlängen auf verschiedene entsprechende, voneinander getrennte Punkte auf der Zwischenbildebene fokussiert;
eine Vielzahl optischer Fasern (55, 56, 57), die jeweils ein optisches Eintrittsfenster haben;
eine Objektivlinse (53) zum Vergrößern des Bildes auf der Zwischenbildebene (52); und
eine Feldlinse (54) zum Kollimieren des Bildes auf der Objektivlinse (53), wobei diese Feldlinse (54) in einem Abstand von der Objektivlinse abgesetzt ist, der ausreicht, um die kollimierten Bilder um mindestens den Durchmesser der zusätzlichen Fasern voneinander zu trennen, wobei das optische Eintrittsfenster einer jeden zusätzlichen Faser (55, 56, 57) mit einem der kollimierten Bilder optisch gekoppelt ist.

20. Wellenlängenmultiplexer mit einer Zwischenbildebene, der folgendes umfaßt:
eine optische Faser (20) mit einer Achse, einem diese Achse koaxial umgebenden Kern (21) und einem Mantel (22), der diesen Kern (21) koaxial umgibt und eine äußere periphere Oberfläche besitzt;
ein Faser-Bragg-Gitter (23), das innerhalb einer festgelegten Länge des Kerns (21) eingeschrieben ist und
eine Hauptbeugungsebene hat; und
eine in die Oberfläche des Mantels eingeschriebene Linse (30), wobei sich diese Linse (30) ungefähr über die festgelegte Länge erstreckt und eine quer zur Faserachse und
im wesentlichen in der Hauptbeugungsebene verlaufende optische Achse hat und wobei diese Linse (30) eine optische Kopplung bei mehreren festgelegten Wellenlängen zwischen dem FBG (23) und entsprechenden Punkten auf der Zwischenbildebene herstellt;
eine Objektivlinse (53) zum Vergrößern des Bildes auf der Zwischenbildebene; und
mehrere zusätzliche optische Fasern (60, 61, 62), die jeweils ein optisches Eintrittsfenster haben und jeweils in einem Abstand zur Objektivlinse abgesetzt sind, der ausreicht, um die Punkte auf der Zwischenbildebene um im wesentlichen mindestens den Durchmesser jeder der zusätzlichen Fasern voneinander zu trennen, wobei das optische Eintrittsfenster einer jeden zusätzlichen Faser (60, 61, 62) mit einem der Punkte optisch gekoppelt ist.

21. Wellenlängenmultiplexer nach Anspruch 20, in dem bei mindestens einer der zusätzlichen Fasern (60, 61, 62) die optische Achse in einem Winkel zu der Zwischenbildebene ausgerichtet ist.

22. Wellenlängenmultiplexer nach Anspruch 20, in dem bei jeder der zusätzlichen Fasern (60, 61, 62) die Achse parallel zur optischen Achse der Objektivlinse ausgerichtet ist und in dem mindestens eine der zusätzlichen Fasern ein optisches Eintrittsfenster mit einer optischen Achse hat, die einen Winkel mit der Zwischenbildebene bildet.

23. Wellenlängenmultiplexer, der eine erste optische Vorrichtung und mehrere zusätzliche optische Vorrichtungen in der Nachbarschaft der ersten optischen Vorrichtung umfaßt, wobei jede der zusätzlichen optischen Vorrichtungen jeweils nur einer von mehreren festgelegten Wellenlängen entspricht und wobei jede dieser optischen Vorrichtungen folgendes beinhaltet:
eine optische Faser (20-3, 20-4, 20-5) mit einer Achse, einem diese Achse koaxial umgebenden Kern (21) und einem Mantel, der diesen Kern (21) koaxial umhüllt und eine äußere periphere Oberfläche hat;
ein Faser-Bragg-Gitter (FBG) (23), das innerhalb einer festgelegten Länge dieses Kerns eingeschrieben ist und eine Hauptbeugungsebene hat; und
eine in die Oberfläche des Mantels eingeschriebene Linse (30), wobei sich diese Linse ungefähr über die festgelegte Länge erstreckt und eine quer zur Faserachse und im wesentlichen in der Hauptbeugungsebene verlaufende optische Achse hat und wobei diese Linse (30) über der Oberfläche relativ zur Hauptbeugungsebene so ausgerichtet ist, daß sie optisch mit dem FBG (23) gekoppelt ist, wobei die Linse jeder dieser zusätzlichen Vorrichtungen optisch mit der Linse (68) der ersten Vorrichtung bei der entsprechenden Wellenlänge gekoppelt ist.

24. Multiplexer nach Anspruch 23, in dem die Linse der ersten Vorrichtung eine Fresnel-Linse (68) ist.

25. Multiplexer nach Anspruch 24, in dem die Fresnel-Linse (68) aus diskreten Linsenteilen mit unterschiedlichen, durch verschiedene Formen bedingte Brennweiten besteht.

26. Multiplexer nach Anspruch 24, in dem die Fresnel-Linse (68) aus diskreten Linsenteilen mit unterschiedlichen, durch Brechzahlvariationen bedingte Brennweiten besteht.

27. Multiplexer nach Anspruch 23, in dem das FBG (23) der ersten Vorrichtung (20-6) im wesentlichen die Fokalebene jeder der Linsen (30) der zusätzlichen Vorrichtungen umfaßt und das FBG (23) jeder der zusätzlichen Vorrichtungen die Fokalebene der Linse (68) der ersten Vorrichtung umfaßt.

28. Multiplexer nach Anspruch 23, in dem die Linse (68) der ersten Vorrichtung auf einen Punkt in jeder der Linsen (30) der zusätzlichen Vorrichtungen fokussiert.

29. Multiplexer nach Anspruch 23, in dem der Teil der Faserachse jeder der zusätzlichen Vorrichtungen (20-3, 20-4, 20-5), die sich in der Nachbarschaft der ersten optischen Vorrichtung (20-6) befindet, senkrecht zu dem Teil der Faserachse der ersten optischen Vorrichtung (20-6) ist, die sich in der Nachbarschaft der zusätzlichen optischen Vorrichtungen (20-3, 20-4, 20-5) befindet.

## Claims

1. An optical device comprising:
an optical fiber having an axis, a core coaxially surrounding said axis, and cladding coaxially surrounding said core and having an outer peripheral surface;
an in-fiber Bragg grating (FBG) inscribed within a predetermined length of said core and having a principal plane of diffraction; and
a lens inscribed in said surface of said cladding, said lens extending along approximately said predetermined length, said lens having an optical axis transverse to said fiber axis and substantially in said principal plane of diffraction, said lens oriented about said surface with respect to said principal plane of diffraction to be optically coupled with said FBG.

2. An optical device according to claim 1 wherein said optical axis is substantially perpendicular to said fiber axis.

3. An optical device according to claim 1 wherein said lens includes a prism, whereby its optical axis is at an acute angle with respect to said fiber axis.

4. An optical device according to claim 1 wherein said lens is cylindric.

5. An optical device according to claim 1 wherein said lens focuses in a first plane containing said fiber axis and in a second plane transverse to said fiber axis.

6. An optical device according to claim 5 wherein said lens is amorphic.

7. An optical device according to claim 5 wherein said lens is aspherical and has a focal length in said first plane different from its focal length in said second plane.

8. An optical device according to claim 1 wherein said lens is a Fresnel lens.

9. An optical device according to claim 8 wherein said lens consists of discrete lens portions of different focal lengths caused by different shapes.

10. An optical device according to claim 8 wherein said lens consists of discrete lens portions of different focal lengths caused by different indexes of refraction.

11. An optical coupler comprising:
a first optical device and at least one additional optical device, each optical device including - surrounding said axis, and cladding coaxially surrounding said core and having an outer peripheral surface;
an in-fiber Bragg grating (FBG) inscribed within a predetermined length of said core and having a principal plane of diffraction;
a lens inscribed in said surface of said cladding, said lens extending along approximately said predetermined 1
an optical fiber having an axis, a core coaxially ength, said lens having an optical axis transverse to said fiber axis and substantially in said principal plane of diffraction, said lens oriented about said surface with respect to said principal plane of diffraction to be optically coupled with said FBG;
said first optical device additionally including -
at least one additional FBG inscribed within said predetermined length and having a principal plane of diffraction, there being one additional FBG for each said additional optical device, each FBG of said first optical device oriented about said core with its principal plane of diffraction at an angle with respect to the principal plane of diffraction of an adjacent FBG;
at least one additional lens inscribed in said surface of said cladding, one for each said additional FBG, each said additional lens extending along approximately said predetermined length, each said additional lens having an optical axis transverse to said fiber axis and substantially in said principal plane of diffraction of a corresponding one of said additional FBGs, each additional lens oriented about said surface with respect to said principal plane of diffraction of said corresponding FBG to be optically coupled with said corresponding FBG;
the lens of each said additional optical device being oriented for substantial optical coupling with a corresponding lens on said first optical device.

12. A coupler according to claim 11 wherein there are an even number of said additional devices.

13. A coupler according to claim 12 wherein there are four of said additional devices.

14. A spectrometer comprising:
an optical fiber having an axis, a core coaxially surrounding said axis, and cladding coaxially surrounding said core and having an outer peripheral surface;
an in-fiber Bragg grating (FBG) inscribed within a predetermined length of said core and having a principal plane of diffraction;
a lens inscribed in said surface of said cladding, said lens extending along approximately said predetermined length, said lens having an optical axis transverse to said fiber axis and substantially in a plane including said principal plane of diffraction, said lens oriented about said surface with respect to said principal plane of diffraction to be optically coupled with said FBG; and
an array of photodetectors disposed substantially in the focal plane of said lens.

15. A spectrometer according to claim 14 further comprising:
means for moving said array in a direction substantially parallel with said principal plane of diffraction.

16. A spectrometer according to claim 14 further comprising:
a power-law amplifier for each of said photo detectors, each responsive to the output of the corresponding photo detector to provide an amplified signal on a corresponding signal line.

17. A spectrometer according to claim 16 further comprising:
a level detector corresponding to each of said signal lines, each for providing a signal on a related signal output line indicative of the level of signal on the corresponding one of said signal lines.

18. A spectrometer according to claim 17 further comprising:
a display device responsive to the signals on said signal output lines for indicating the levels of wavelengths sensed by said photodetectors.

19. A wavelength division multiplexer having an intermediate image plane, comprising:
an optical fiber having an axis, a core coaxially surrounding said axis, and cladding coaxially surrounding said core and having an outer peripheral surface;
an in-fiber Bragg grating inscribed within a predetermined length of said core and having a principal plane of diffraction;
a lens inscribed in said surface of said cladding, said lens extending along approximately said predetermined length, said lens having an optical axis transverse to said fiber axis and substantially in said principal plane of diffraction, said lens focusing radiation of different wavelengths to corresponding different spots separated from one another on said intermediate image plane;
a plurality of additional optical fibers, each having an optical entrance window;
an objective lens for magnifying the image on said intermediate image plane; and
a field lens for collimating the image at said objective lens, said field lens displaced from said objective lens a sufficient distance to separate said collimated images by at least the diameter of said additional fibers, the optical entrance window of each of said additional fibers being optically coupled with one of said collimated images.

20. A wavelength division multiplexer having an intermediate image plane, comprising:
an optical fiber having an axis, a core coaxially surrounding said axis, and cladding coaxially surrounding said core and having an outer peripheral surface;
an in-fiber Bragg grating inscribed within a predetermined length of said core and having a principal plane of diffraction; and
a lens inscribed in said cladding, said lens extending along approximately said predetermined length, said lens having an optical axis transverse to said fiber axis and substantially in said principal plane of diffraction, said lens providing optical coupling at each of a plurality of predetermined wavelengths between said FBG and corresponding spots on said intermediate image plane;
an objective lens for magnifying the image on said intermediate image plane; and
a plurality of additional optical fibers, each having an optical entrance window, each displaced from said objective lens a sufficient distance to separate said spots on said intermediate image plane by at least substantially the diameter of each of said additional fibers, the optical entrance window of each of said additional fibers being optically coupled with one of said spots.

21. A multiplexer according to claim 20 wherein at least one of said additional fibers has its axis aligned at an angle to said intermediate image plane.

22. A multiplexer according to claim 20 wherein each of said additional fibers has its axis parallel to the optical axis of said objective lens, and at least one of said additional fibers has an optical entrance window with an optical axis at an angle to said intermediate image plane.

23. A wavelength division multiplexer comprising a first optical device and a plurality of additional optical devices in the vicinity of said first optical device, each of said additional optical devices corresponding to a unique one of a plurality of predetermined wavelengths, each of said optical devices including:
an optical fiber having an axis, a core coaxially surrounding said axis, and cladding coaxially surrounding said core, and having an outer peripheral surface;
an in-fiber Bragg grating (FBG) inscribed within a predetermined length of said core and having a principal plane of diffraction; and
a lens inscribed in said surface of said cladding, said lens extending along approximately said predetermined length, said lens having an optical axis transverse to said fiber axis and substantially in said principal plane of diffraction, said lens oriented about said surface with respect to said principal plane of diffraction to be optically coupled with said FBG, the lens of each of said additional devices being optically coupled to the lens of said first device at said corresponding wavelength.

24. A multiplexer according to claim 23 wherein said lens of said first device is a Fresnel lens.

25. A multiplexer according to claim 24 wherein said Fresnel lens consists of discrete lens portions of different focal lengths caused by different shapes.

26. A multiplexer according to claim 24 wherein said Fresnel lens comprises discrete lens portions of different focal lengths caused by different indexes of refraction.

27. A multiplexer according to claim 23 wherein the FBG of said first device substantially encompasses the focal plane of each said lens of said additional devices and the FBG of each of said additional devices substantially encompasses the focal plane of said lens of said first device.

28. A multiplexer according to claim 23 wherein said lens of said first device focuses to a spot in each said lens of said additional devices.

29. A multiplexer according to claim 23 wherein the portion of the fiber axis of each of said additional devices which is in the vicinity of said first optical device is perpendicular to the portion of the fiber axis of said first optical device which is in the vicinity of said additional optical devices.

## Revendications

1. Appareil optique comprenant les éléments suivants :
une fibre optique (20) avec un axe, un noyau (21) entourant cet axe de manière coaxiale et une gaine (22), qui entoure le noyau (21) de manière coaxiale et possède à l'extérieur une surface périphérique ;
un Faser-Bragg-Gitter (FBG) (23) circonscrit à l'intérieur d'une longueur déterminée du noyau et présentant un plan de diffraction principal et
une lentille (30) insérée dans la surface de la gaine, s'étendant à peu près sur la longueur fixée et possédant un axe optique transversal par rapport à l'axe de la fibre et épousant essentiellement le plan de diffraction principal ; cette lentille (30) est orientée sur la surface de telle façon par rapport au plan de diffraction principal qu'elle est couplée optiquement au FBG (23).

2. Appareil optique selon la revendication 1, dans lequel l'axe optique est à peu près perpendiculaire à l'axe de la fibre.

3. Appareil optique selon la revendication 1, dans lequel la lentille comprend un prisme (37), son axe optique formant ainsi un angle aigu avec l'axe de la fibre.

4. Appareil optique selon la revendication 1, dans lequel la lentille (30) est cylindrique.

5. Appareil optique selon la revendication 1, dans lequel la lentille (30) focalise dans un premier plan, comprenant l'axe de la fibre, et dans un deuxième plan, transversal par rapport à l'axe de la fibre.

6. Appareil optique selon la revendication 5, dans lequel la lentille (30) est amorphe.

7. Appareil optique selon la revendication 5, dans lequel la lentille (30) est non sphérique et a une distance focale différente dans le premier et dans le deuxième plan.

8. Appareil optique selon la revendication 1, dans lequel la lentille (68) est une lentille Fresnel.

9. Appareil optique selon la revendication 8, dans lequel la lentille (68) est constituée de parties discrètes avec différentes focales, dues à des formes différentes.

10. Appareil optique selon la revendication 8, dans lequel la lentille (68) est constituée de parties discrètes avec différentes focales dues à des variations de l'indice de réfraction.

11. Optocoupleur, comprenant les éléments suivants :
un premier appareil optique et au moins un appareil optique supplémentaire, chaque appareil optique comprenant :
une fibre optique (20a, 20b, 20c, 20d, 20e) avec un axe, un noyau entourant cet axe de manière coaxiale et une gaine entourant ce noyau d'une manière coaxiale et possédant une surface périphérique extérieure.
un Faser-Bragg-Gitter (FBG) circonscrit à l'intérieur d'une longueur déterminée du noyau et présentant un plan de diffraction principal ;
une lentille (30) insérée dans la surface de la gaine, s'étendant à peu près sur la longueur fixée et possédant un axe optique (axe de la lentille) transversal par rapport à l'axe de la fibre et épousant essentiellement le plan de diffraction principal ; cette lentille (30) est orientée sur la surface de telle façon par rapport au plan de diffraction principal qu'elle est couplée optiquement au FBG ; ce premier appareil optique comprend en outre les éléments suivants :
au moins un FBG supplémentaire, circonscrit à l'intérieur de la longueur fixée et présentant un plan de diffraction principal, un FBG supplémentaire devant être prévu pour chacun de ces appareils optiques supplémentaires et chaque FBG du premier appareil optique étant orienté, dans son plan de diffraction principal au-dessus du noyau, en angle par rapport au plan de diffraction principal d'un FBG avoisinant ;
au moins une lentille supplémentaire (30) insérée dans la surface de la gaine, une pour chaque FBG supplémentaire, chaque lentille supplémentaire (30) s'étendant le long de la longueur fixée, chaque lentille supplémentaire (30) ayant un axe optique transversal par rapport à l'axe de la fibre et épousant à peu près le plan de diffraction principal du FBG supplémentaire correspondant, et chaque lentille supplémentaire (30) étant orientée de telle façon sur la surface par rapport au plan de diffraction principal du FBG correspondant qu'elle est couplée optiquement avec le FBG correspondant (23) ; enfin, la lentille (30) de l'appareil optique correspondant étant destinée substantiellement à un couplage optique avec une lentille correspondante (30) du premier appareil optique.

12. Optocoupleur selon la revendication 11, au niveau duquel se trouve un nombre pair d'appareils supplémentaires.

13. Optocoupleur selon la revendication 12, au niveau duquel se trouvent quatre des appareils supplémentaires.

14. Spectromètre comprenant les éléments suivants :
une fibre optique (20) avec un axe, un noyau (21) entourant cet axe de manière coaxiale et une gaine (22), qui entoure le noyau (21) de manière coaxiale et possède une surface périphérique externe ;
un Faser-Bragg-Gitter (FBG) (23) circonscrit à l'intérieur d'une longueur déterminée du noyau et présentant un plan de diffraction principal ;
une lentille (30) insérée dans la surface de la gaine (22), s'étendant à peu près sur la longueur fixée et possédant un axe optique (axe de la lentille) transversal par rapport à l'axe de la fibre et épousant essentiellement un plan comprenant le plan de diffraction principal ; cette lentille (30) est orientée sur la surface de telle façon, par rapport au plan de diffraction principal, qu'elle est couplée optiquement au FBG (23) ; et
une série de photodétecteurs (40) disposés pour l'essentiel dans le plan focal de cette lentille.

15. Spectromètre selon la revendication 14, comprenant en outre :
un moyen (42) permettant d'orienter le montage ci-dessus dans une direction à peu près parallèle au plan de diffraction principal.

16. Spectromètre selon la revendication 14, comprenant en outre :
un multiplicateur de potentialisation (45) pour chacun des photodétecteurs (40), qui réagit au signal de sortie du photodétecteur correspondant (40), pour délivrer un signal amplifié à une ligne de signal correspondante (47).

17. Spectromètre selon la revendication 16, comprenant en outre :
un détecteur de niveau (46) pour chaque ligne de signal (47), qui délivre à la ligne de sortie de signal correspondante (48) un signal indiquant le niveau du signal sur la ligne de signal (47) correspondante.

18. Spectromètre selon la revendication 17, comprenant en outre :
un dispositif indicateur (49) fournissant les niveaux des longueurs d'ondes relevées par les photodétecteurs (40), lequel réagit aux signaux au niveau des lignes de sortie de signal (48).

19. Multiplexeur en longueur d'onde avec un plan d'image intermédiaire, comprenant :
une fibre optique (20) avec un axe, un noyau (21) entourant cet axe de manière coaxiale et une gaine (22), qui entoure le noyau (21) de manière coaxiale et possède une surface périphérique externe ;
un Faser-Bragg-Gitter (23) circonscrit à l'intérieur d'une longueur déterminée du noyau (21) et présentant un plan de diffraction principal et
une lentille (30) insérée dans la surface de la gaine, s'étendant à peu près sur la longueur fixée et possédant un axe optique transversal par rapport à l'axe de la fibre et épousant essentiellement le plan de diffraction principal, cette lentille focalisant des rayons de différentes longueurs d'onde sur divers points séparés les uns des autres sur le plan de l'image intermédiaire ;
un grand nombre de fibres optiques (55, 56, 57), ayant chacune une fenêtre optique d'entrée ;
une lentille d'objectif (53) pour agrandir l'image sur le plan de l'image intermédiaire ; et
une lentille de champ (54) pour la collimation de l'image sur la lentille d'objectif (53), cette lentille de champ (54) étant placée à une distance suffisante de la lentille d'objectif pour que les images collimatées soient séparées les unes des autres d'un espace au moins égal au diamètre des fibres supplémentaires, et la fenêtre d'entrée optique de chaque fibre supplémentaire (55, 56, 57) étant couplée optiquement avec l'une des images collimatées.

20. Multiplexeur en longueur d'onde avec un plan d'image intermédiaire, comprenant :
une fibre optique (20) avec un axe, un noyau (21) entourant cet axe de manière coaxiale et une gaine (22), qui entoure le noyau (21) de manière coaxiale et possède une surface périphérique externe ;
un Faser-Bragg-Gitter (23) circonscrit à l'intérieur d'une longueur déterminée du noyau (21) et présentant un plan de diffraction principal ; et
une lentille (30) insérée dans la surface de la gaine, s'étendant à peu près sur la longueur fixée et possédant un axe optique transversal par rapport à l'axe de la fibre et épousant essentiellement le plan de diffraction principal, cette lentille (30) établissant un couplage optique pour plusieurs longueurs d'ondes déterminées entre le FBG (23) et des points correspondants sur le plan de l'image intermédiaire ;
une lentille d'objectif (53) pour agrandir l'image sur le plan de l'image intermédiaire ; et
plusieurs fibres optiques supplémentaires (60, 61, 62) ayant chacune une fenêtre optique d'entrée et étant placées à une distance suffisante de la lentille d'objectif pour que les points sur le plan de l'image intermédiaire soient séparés les uns des autres d'un espace grossièrement au moins égal au diamètre des fibres supplémentaires, la fenêtre d'entrée optique de chaque fibre supplémentaire (60, 61, 62) étant couplée optiquement avec l'un des points.

21. Multiplexeur en longueur d'onde selon la revendication 20, dans lequel, pour au moins l'une des fibres supplémentaires (60, 61, 62), l'axe optique forme un angle avec le plan de l'image intermédiaire.

22. Multiplexeur en longueur d'onde selon la revendication 20, dans lequel, pour chacune des fibres supplémentaires (60, 61, 62), l'axe est parallèle à l'axe optique de la lentille d'objectif et dans lequel au moins l'une des fibres supplémentaires a une fenêtre d'entrée optique avec un axe optique formant un angle avec le plan de l'image intermédiaire.

23. Multiplexeur en longueur d'onde comprenant un premier appareil optique et plusieurs appareils optiques supplémentaires à proximité du premier appareil optique, chacun des appareils optiques supplémentaires correspondant à une seule de plusieurs longueurs d'ondes déterminées et chacun de ces appareils optiques comprenant les éléments suivants :
une fibre optique (20-3, 20-4, 20-5) avec un axe, un noyau (21) entourant cet axe de manière coaxiale et une gaine (22), qui entoure le noyau (21) de manière coaxiale et possède une surface périphérique externe ;
un Faser-Bragg-Gitter (23) circonscrit à l'intérieur d'une longueur déterminée du noyau (21) et présentant un plan de diffraction principal ; et
une lentille (30) insérée dans la surface de la gaine, s'étendant à peu près sur la longueur fixée et possédant un axe optique transversal par rapport à l'axe de la fibre et épousant essentiellement le plan de diffraction principal, cette lentille (30) étant disposée sur la surface de telle façon, par rapport au plan de diffraction principale, qu'elle soit couplée optiquement avec le FBG (23), et la lentille de chacun de ces appareils supplémentaires étant couplée optiquement avec la lentille (68) du premier appareil pour la longueur d'onde correspondante.

24. Multiplexeur selon la revendication 23, dans lequel la lentille du premier appareil est une lentille Fresnel (68).

25. Multiplexeur selon la revendication 24, dans lequel la lentille Fresnel (68) est constituée de parties discrètes avec différentes focales dues à des formes différentes.

26. Multiplexeur selon la revendication 24, dans lequel la lentille Fresnel (68) est constituée de parties discrètes avec différentes focales dues à des variations de l'indice de réfraction.

27. Multiplexeur selon la revendication 23, dans lequel le FBG (23) du premier appareil (20-6) comprend essentiellement le plan focal de chacune des lentilles (30) des appareils supplémentaires et le FBG (23) de chacun des appareils supplémentaires comprend le plan focal de la lentille (68) du premier appareil.

28. Multiplexeur selon la revendication 23, dans lequel la lentille (68) du premier appareil est focalisée sur un point dans chacune des lentilles (30) des appareils supplémentaires.

29. Multiplexeur selon la revendication 23, dans lequel la partie de l'axe de la fibre de chacun des appareils supplémentaires (20-3, 20-4, 20-5) qui se trouve à proximité du premier appareil optique (20-6) est perpendiculaire à la partie de l'axe de la fibre du premier appareil optique (20-6) qui se trouve à proximité des appareils optiques supplémentaires (20-3, 20-4, 20-5).
